Europäisches Patentamt

(19) European Patent Office

Office européen des brevets

(11) Publication number: **0 284 154 B1**

(12) **EUROPEAN PATENT SPECIFICATION**

(45) Date of publication of patent specification :
04.12.91 Bulletin 91/49

(51) Int. Cl.⁵ : **B65G 67/60, B65G 65/22**

(21) Application number : **88200517.6**

(22) Date of filing : **21.03.88**

(54) **Apparatus for the continuous extraction and conveying of bulk material.**

(30) Priority : **25.03.87 NL 8700692**

(43) Date of publication of application :
**28.09.88 Bulletin 88/39**

(45) Publication of the grant of the patent :
**04.12.91 Bulletin 91/49**

(84) Designated Contracting States :
**AT BE CH DE ES FR GB GR IT LI NL SE**

(56) References cited :
**EP-A- 0 057 167**
**EP-A- 0 057 892**
**EP-A- 0 173 892**
**FR-A- 2 317 199**
**GB-A- 2 070 556**

(73) Proprietor : **HOOGOVENS GROEP B.V.**
**P.O. Box 10.000**
**NL-1970 CA IJmuiden (NL)**

(72) Inventor : **Luttekes, Evert**
**Esdoornlaan 8**
**NL-1829 HG Oudorp (NL)**
Inventor : **Klaassen, Antonius Adrianus Maria**
**Voorteindseweg 24a**
**NL-5091 TK Ooost West Middelbeers (NL)**
Inventor : **Vermeijden, Pieter**
**Berglustlaan 58a**
**NL-3054 BJ Rotterdam (NL)**

(74) Representative : **Van Breda, Jacobus, Mr. Ir. et al**
**HOOGOVENS GROEP BV P.O. Box 10.000**
**NL-1970 CA IJmuiden (NL)**

EP 0 284 154 B1

## Description

The invention relates to an apparatus for the extraction and conveying of bulk material from a storage vessel having a top opening, for example, for the unloading of a ship's hold loaded with bulk cargo. The apparatus is provided with at least one digging device which picks up the bulk material inside the vessel and carries it to a first conveying means extending into the hold which conveys the bulk material picked up by the digging device outside the hold. The invention will be particularly described here as applied to the unloading of a ship's hold, but is not limited to this application.

With reference to the Swedish patent publication 8603996-3, the applicant has voluntarily limited the scope of the present application and submitted separate claims for Sweden.

Apparatus for the continuous extraction and transfer of bulk material, also referred to briefly as continuous unloaders, are used in the transfer of bulk cargo such as coal, ores, artificial fertilizers, derivatives and grain from a ship's hold to the quay. Continuous unloaders unload the bulk cargo in a continuous or virtually continuous stream, in contrast to intermittently working grab cranes.

One continuous unloader described in EP-A-0173892 has a digging device which is equipped with a blade drum rotatable in the normal working position around a horizontal axis, which loosens the bulk cargo and discharges it into a space inside the rotational circumference of the blade drum. A flat belt conveyor runs in this space parallel with the axis of rotation of the drum and directly transfers the material discharged onto it to a cell belt conveyor extending into the ship's hold. The blade drum and flat belt conveyor assembly is suspended in such a way that it can rotate around a horizontal axis running parallel with the cell conveyor.

An initial disadvantage of this known continuous unloader is the mechanical vulnerability of the blade drum and the flat belt conveyor running inside it.

Another disadvantage is that the digging device has a limited number of degrees of freedom and therefore offers only limited possibilities of controlling the slope of the heap of bulk cargo still in the hold, in particular due to the limited effective angle of the digging device to the vertical. If, as a result of a high and steep slope the bulk cargo should collapse and bury the blade drum, this can lead to serious damage to the mechanical construction of the continuous loader and in particular to the blade drum.

A further disadvantage of the continuous unloader described is the nuisance to the environment, in particular by the production of dust. In order to achieve an adequately large unloading capacity with the continuous unloader the drum must extract and convey away a volume of the bulk cargo in accordance with the required unloading capacity. Therefore, if the drum chosen is small, it must be operated at a high speed of rotation in order to achieve the required unloading capacity. The consequence of the high speed of rotation is a high cutting speed at the point of digging into the bulk cargo and in consequence the production of a large volume of dust which can also spread outside the hold.

Dust is also produced because the blade drum extracts close to the surface of the bulk cargo and the place where the drum penetrates into the bulk cargo is not screened very much by the drum itself or by the bulk cargo.

Dumping the bulk cargo from the blade drum on to the flat belt conveyor also causes dust which can escape through the openings in the drum and reach the free space in the hold.

The problem of dust production is all the more pressing because, for safe operation of the continuous unloader, the operator of the apparatus must be able to see into the hold. The influence of a continuous unloader on the environment inside and outside the hold is therefore an important factor in installing and operating a continuous unloader.

If, on the other hand, the blade drum is generously dimensioned so that the cutting speed can be kept low, the accessibility for the bulk cargo in the corners and on the bottom of the hold is limited. The cargo remaining in the hold is usually collected by means of a dipper dredger and can then for the most part be carried outside the hold by the continuous unloader. In order to clear the cargo space thoroughly and thus to limit this last unloading phase, also called the trimming phase, the drum must be small.

The capacity required during normal unloading on the one hand and the limiting of dust production and of the duration of the trimming phase on the other represent conflicting demands on the drum.

Yet another disadvantage of this known continuous unloader is the inadequate loading of the cell belt conveyor. In order to use the available conveying capacity effectively, the cell belt conveyor is operated at a relatively high speed of approximately 3 m/sec. In the case of the loading method described, the available conveying capacity cannot be fully utilised because the time available for completely filling a cell is too short. The spacing between the cells is usually approximately 0.6 m ; with the cell belt conveyor running speed of 3 m/sec referred to above, this means that for the loading of a cell only 0.2 sec is available. Increasing the quantity of bulk cargo conveyed by increasing the running speed of the flat belt conveyor gives only a limited improvement and is only applicable over a limited speed range. If the running speed of the flat belt conveyor is too fast, the bulk cargo it discharges is thrown back by the rubber cell belt conveyor in the direction of the flat belt conveyor and part of it therefore is not conveyed outside the hold but remains behind as spillage in the hold.

Furthermore, the increase in the quantity of bulk cargo discharged can be reversed when the running speed of the flat belt conveyor is increased, because the accelerating force on the bulk cargo in the direction of travel is greater than the friction force with the flat belt conveyor in its direction of travel.

Another disadvantage relates to the characteristics of a cell belt conveyor. During operation the cell belt conveyor can only be twisted through a limited angle. This condition places a restriction on the possible movements of the blade drum in a plane perpendicular to the direction of travel of the cell belt conveyor at the location of the digging device. The disclosure does not indicate how greater mobility can be given to the digging device. The choice of the pattern of extraction of the bulk cargo in the hold with the known installation is therefore restricted.

NL-A-8101003 (GB-A-2070556) discloses a vertical elevator in the form of a belt conveyor with paddles or buckets working with a digging device which has digging buckets rotatable around a horizontal axis at the bottom of the digging device where digging takes place. The elevator and digging device are suspended from the horizontal jib of a crane and rotatable about a vertical axis. The digging device apparently delivers the cargo via a chute into the elevator which likewise unloads the cargo outside the ship into a funnel shaped chute. Again, control of dust in the hold is difficult and the unloading of bulk cargo outside the hole again brings the objection of nuisance to the environment. Additionally high cutting speeds are required.

In SE-A-390157 an unloading apparatus is described in which the first conveying system is a screw conveyor. The apparatus does not include an independent digging device ; the same screw conveyor is used for extracting the bulk cargo as for bringing the bulk cargo outside the hold. The screw conveyor arrangment has the serious disadvantage that, due to the length required, the screw conveyor is fitted with intermediate bearings, in which the central shaft of the screw conveyor is mounted with respect to the outside casing. The transporting helical surface of the screw conveyor is missing at the place where these intermediate bearings are situated. At the location of the intermediate bearings the material to be conveyed is forced by the underlying part of the screw conveyor across the intermediate bearing attachment towards the overlying part of the screw conveyor. These intermediate bearings have a negative influence on the operating safety and working life of the screw conveyor. Another disadvantage is the vulnerability of the digging feed device of the screw conveyor which digs into the bulk cargo at high speed. Furthermore, the apparatus has the disadvantage that the unloading capacity falls as the natural slope of the bulk cargo to be unloaded becomes steeper. Also, due to the limited dimensions of the feeder it is difficult to control the slope of the bulk cargo while maintaining the unloading capacity.

EP-A-57167 describes a feeding device for a vertical screw conveyor, wherein the feeding device is one or more spiral wings rotated oppositely to the screw of the conveyor about the same axis. The specific use to which the device is put is not given.

In EP-A-0007892 a digging device is described for use with a screw conveyor during the trimming phase. At least the layer of bulk cargo lying on the bottom and on intermediate levels of the hold and of considerable thickness cannot be picked up by the first screw conveyor. The digging device is positioned during the trimming phase over the part of the underside of the first screw conveyor, which itself digs during normal operation. This digging device comprises two screw jacks arranged in tandem and rotating in opposite directions which carry the material towards a second screw conveyor placed between the two screw jacks. The longitudinal axis of the second screw conveyor is perpendicular to the longitudinal axis of the two screw jacks. The second screw conveyor discharges into a chute mounted at the lower end of the first screw conveyor.

The object of the invention is to provide a continuous unloader in which the above-mentioned disadvantages may be overcome in a satisfactory manner, in particular the control of dust and the feeding of the bulk material at an adequate rate to the conveyor which conveys it out of the vessel.

The invention consists in apparatus for the continuous extraction and conveying of bulk material from a storage vessel having a top opening, the apparatus having a digging device which picks up the bulk material and first conveying means which, in use, extends into said vessel through said top opening and which is arranged to receive the bulk material from the digging device and convey it outside the vessel, wherein the digging device has a substantially cylindrical pickup element enclosing an internal discharge volume rotatable around an axis which discharges the material at a position within said discharge volume to second conveying means which is separate from the first conveying means and conveys the material to the first conveying means. Such apparatus is known from EP-A-0173892. The apparatus according to the invention is characterised in that the second conveying means is a screw conveyor and that the pickup element is a blade wheel rotatable around the axis of the screw conveyor having at least one discharge element which discharge element is a blade of the blade wheel and which urges the material into the screw conveyor, and in that a trough is arranged to receive the material from the screw conveyor and deliver it directly or indirectly to the first conveying means.

The statement that the discharge elements of the blade wheel urge the material onto the screw conveyor is intended to mean transporting the material in the desired direction and thereby creating pressure in the transport direction.

By the invention it is achieved that the digging device of the continuous unloader can have a great degree of mobility in the hold of a ship so that the conveying of the cargo to the first conveyor is ensured. Because the screw conveyor works rotation-symmetrically, it can be loaded on all sides and likewise be unloaded on all sides. The part of the first conveyor which reaches into the hold consequently needs to make fewer movements during unloading in relation to the ship, so that the masses to be accelerated and retarded are small.

Because of the way it works the screw conveyor is generally entirely enclosed, with the exception of the two areas near its two ends. Therefore, while the material is being conveyed, the screw conveyor generates very little dust.

The screw conveyor used according to the invention, can be kept short and needs no intermediate bearings, since it provides only intermediate transport between the blade wheel and the first conveyor. The disadvantages of the screw conveyor of greater length described above are thus avoided.

Preferably the trough is provided with drive means for rotating it about an axis substantially parallel to the direction of the part of the first conveying means extending into the vessel.

In the invention, by use of the trough into which the screw conveyor discharges, it is possible to give the digging device great mobility with respect to the first conveying means while maintaining a fixed loading point for the latter. By making the upper part of the trough itself rotation-symmetrical around the same axis, which runs parallel with the direction of travel of the part of the first conveying means extending into the vessel, and around which the digging device can rotate, it is possible in a simple manner to load the trough on all sides and at the same time to keep the trough covered in order to retain the dust produced during the loading of the trough and to prevent it spreading inside and outside the vessel, e.g. the hold.

It is preferred also that the apparatus is equipped with a chute into which the trough delivers the material via an outflow opening, the chute being fixed relative to the first conveying means and delivering the material to the first conveying means. A chute which extends in the direction of travel of the first conveying means increases the available loading distance of the first conveying means. In this way quieter loading and better use of the conveying capacity of the first conveying means, in particular a cell belt conveyor, can be achieved. Spillage is also prevented.

The blade wheel used in the invention preferably has a plate at one side having an opening through which the screw conveyor extends, and has at least two blades which project away from the plate and extend spirally around the opening, the outer lower end portion of the blades bending away from the screw conveyor and constituting the discharge elements urging the material into the screw conveyor.

In bulk cargo, in particular in coal and ore, foreign material and foreign objects such as tools and parts of the structure used during mining are found. These foreign objects can cause seizure of the screw conveyor. With use of a blade wheel which has an opening at the bottom, the screw conveyor can be cleared by rotating the screw in the opposite direction to its normal direction of rotation. The foreign material can then leave the digging device through the opening in the blade wheel.

In this blade wheel the blades preferably increase in height from their outer ends to their inner ends.

Preferably in the invention the longitudinal axis of the screw conveyor in the normal working position is parallel with the conveying direction of the part of the first conveying means extending into the vessel.

Preferably the digging device can be pivoted around at least one axis which is perpendicular to the conveying direction of the part of the first conveying means extending into the hold, in order to vary the digging angle.

Preferably also the blade wheel is rotated around an axis parallel to the conveying direction of the part of the first conveying means extending into the hold.

By these features the invention can provide a continuous unloader with a digging device with many degrees of freedom, which allows a broad range of extraction patterns. The digging device makes it possible to extract the bulk cargo in the hold in layers, a layer being approximately of the same thickness as the height of the blade wheel rotating around its shaft, while controlling the slope of the bulk cargo still present in the hold. During the extraction use can be made of the possibility of rotating through more than 360 degrees and of the possibility of swinging the digging device from its normal orientation.

The great mobility of the digging device can provide the advantage that the digging device can clear the hold to a large extent so that the trimming phase can be short and high unloading efficiency be achieved.

The diameter of the blade wheel influences the degree to which a hold can be unloaded only to a limited extent, due to the high mobility of the digging device with respect ot the first conveying means. The diameter of the blade wheel and its speed of rotation can therefore be chosen in such a way that the feed speed at the location of the bulk cargo is small. Consequently little dust is developed as a result of the extraction. Furthermore, the dust which is produced is enclosed by the plate of the blade wheel, the bulk cargo still to be extracted and the bulk cargo present in the blade wheel. The total dust production in the hold can be considerably reduced when using a continuous unloader embodying these preferred features of the invention.

The mechanical wear on the cutting edges of the blade wheel can be small, due to a low speed differential between the cutting edges of the blade wheel and the bulk cargo to be extracted.

Preferably, when the invention is applied to unloading a ship's hold, the first conveying means conveys the bulk cargo as far as the quayside, preferably at a speed which is in principle uniform. Using a movable digging device according to the invention, as described above, to which the ship's hold is widely accessible, the digging device combines all the movement possibilities required for unloading. This gives the advantage that the number of overflow points outside the hold can be reduced an in particular that there is no longer any need for a rotating overflow point between the part of the first conveying means reaching into the hold and the conveying means running along a jib. The environmental pollution on the quay as a consequence of the unloading is consequently reduced.

The invention also relates to a digging device suitable for an apparatus for the continuous extraction and conveying of bulk material, comprising a screw conveyor and a blade wheel as a substantially cylindrical pick-up element enclosing an internal discharge volume which blade wheel is connected to one end of the screw conveyor and rotatable around the axis of the screw conveyor, the blade wheel having a top frame and at least one blade connected to the top frame and extending spirally around the screw conveyor. Such digging device is known from EP-A-0057167. It has been shown that a blade wheel that urges the material onto the screw conveyor is obtained in an embodiment that according to the invention is characterised in that the blade is shaped such that, seen in radial direction, the distance from the blade to the axis of the screw conveyor increases from the top frame in downward direction over at least part of the height of the blade and in that the amount of such increase decreases along the blade in the direction to the axis over at least part of the extension of the blade.

The invention will be illustrated below by way of non-limitative example, with reference to the drawings in which the operation and construction of continuous unloaders embodying the invention is shown schematically. In the drawings :

Fig. 1 is a diagrammatic view of the continuous loader embodying the invention mounted on the quay and a ship to be unloaded moored against the quay.

Fig. 2 is a detail view of the digging device of the unloader.

Fig. 3 is a diagrammatic representation of some extraction patterns.

Fig. 4 is a more detailed representation of an extraction pattern.

Figs. 5-9 show an alternative embodiment of a digging device according to the invention.

Fig. 10 is an underside view of an embodiment of the blade wheel used in the invention.

Fig. 11 is a side view of an embodiment of the blade wheel.

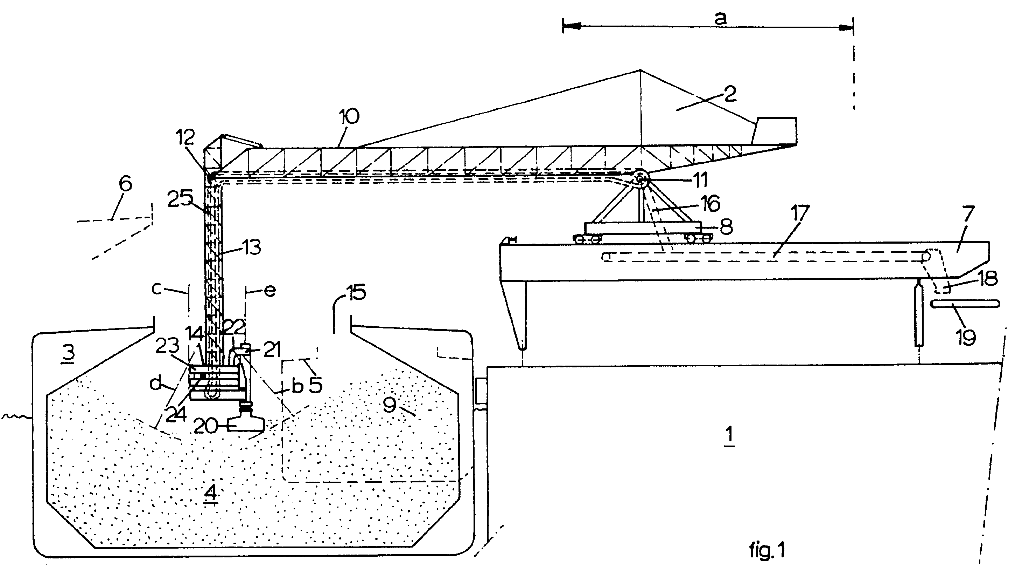

In Fig. 1, 1 denotes the quay on which a continuous unloader 2 can travel in the longitudinal direction, which is perpendicular to the plane of the drawing. A ship 3, shown in cross-section, is moored to the quay 1. The ship displaces for example 160,000 DWT and in the situation shown a hold of the ship is still partially filled with bulk cargo 4. The hold has a top opening 15 or hatch opening. In the figure the dashed line 5 diagrammatically represents a smaller ship of 30,000 DWT for example, which ship must also be capable of being unloaded by the same continuous unloader. Lines 6 indicate the position of the ship 3 in the unloaded condition. Ebb and flood of the tide can cause considerable variations in height between ship and quay. The working range of the continuous unloader must be capable of accommodating such height variations and capacity variations of the ships.

The continuous unloader comprises a bridge 7 which can run on rails (not shown) laid longitudinally on the quay 1. A mobile crab 8 is positioned on the bridge 7. The working range of the crab, i.e. the region over which the crab is able to travel during unloading, is indicated by the line a.

The continuous unloader 2 has, mounted on the crab 8, a jib 10. Near one end the jib is suspended in the crab 8 and can rotate in it around a horizontal axis 11. The jib can, as its normal working range, for example, assume an angle between + 20 degrees and – 20 degrees with respect to the horizontal. At times when the jib is out of operation, it can be rotated to an angle of + 40 degrees above the horizontal, for example. At its end 12 of the jib a vertical supporting frame 13 is suspended, rotatable around a horizontal axis at the end 12, with an endless cell belt conveyor 25 extending inside it. At the end of the conveyor 25 extending into the hold of the ship 3 the supporting frame 13 carries the digging device 14. The cell belt conveyor is of conventional type and need not be described in detail. See EP-A-0173892 for a similar conveyor.

The digging device 14 consists of a blade wheel 20 and a screw conveyor 21. In the vertical position of the screw conveyor 21 the blade wheel 20 rotates around a vertical axis. By the movement of the crab 8 on the bridge 7 a layer of bulk cargo can be extracted from under the hatch opening 15 in a transverse direction across the ship. By moving the bridge 7 along the quay a layer of bulk cargo in the longitudinal direction of the ship can be extracted.

In order to be able to extract bulk cargo from below the decks of the ship the screw conveyor can be swung about a normally horizontal axis into the position indicated for example, by b, in order to extract from under the upper deck on the side away from the quay. Positions between the vertical position of the screw conveyor and the position indicated by b are possible.

In order to be able to extract bulk cargo lying under the side of the upper deck towards the quay the digging device is rotated in a horizontal plane through 180 degrees about the line of the conveyor 25 until the direction indicated by e of the screw conveyor 21 comes to the position indicated by c and from there swung into the position indicated by d. Intermediate positions between the directions c and the position d are possible, as are intermediate positions between the directions e and c. In an analogous manner the bulk cargo can be extracted from under the parts of the upper decks adjacent the front and rear of the hatch opening 15.

The possibility of rotating the digging device including the screw conveyor 21 (second conveying means) around an axis running parallel to the direction of travel of the cell belt conveyor 25 (first conveying means) and the possibility of swinging the screw conveyor 21 with the blade wheel 20 also make satisfactory control of the slope 9 of the cargo possible.

The material which is loosened by the blade wheel 20 rotating around the direction of the longitudinal axis of the screw conveyor and moving laterally in the horizontal plane is forced by the blades of the wheel 20 into a space inside the wheel, i.e. within the rotational circumference of the wheel, and is there immediately taken up by the end of the screw conveyor 21 extending into the blade wheel. The blades of the wheel, especially their inner ends (see below) thus urge the material into the screw conveyor. The screw conveyor passes the material into the overflow 22 where it is discharged into a circular trough 23 which rotates around an axis which is vertical in the situation shown in the drawing. This trough is made substantially dust-tight, so that the dust which may be produced during the outflow of the bulk cargo from the overflow into the trough cannot penetrate into the hold. The trough 23 brings the material to a chute 24. A cell belt conveyor 25 is loaded through the intermediary of the chute 24. The cell belt conveyor brings the material outside the hold and without spillage to a point near to the pivot 11 of the jib in the crab. Only here is the cell belt conveyor 25 discharged into a chute 16 attached to a crab which debouches above a flat conveyor belt 17 which is mounted on the bridge 7. The belt conveyor 17 brings the material to a chute 18 mounted rigidly on the bridge which discharges on to a flat belt conveyor 19 positioned on the quay. The flat belt conveyor 19 carries the material to storage.

As a result of the numerous degrees of freedom of the digging device 14 centrifugal spillage (overflow) at the location of the end 12 of the vertically operating conveyor is avoided. The nuisance to the environment outside the ship as a consequence of the unloading is thereby reduced. The remaining overflow points outside the hold can be sealed against the production of dust in a known manner.

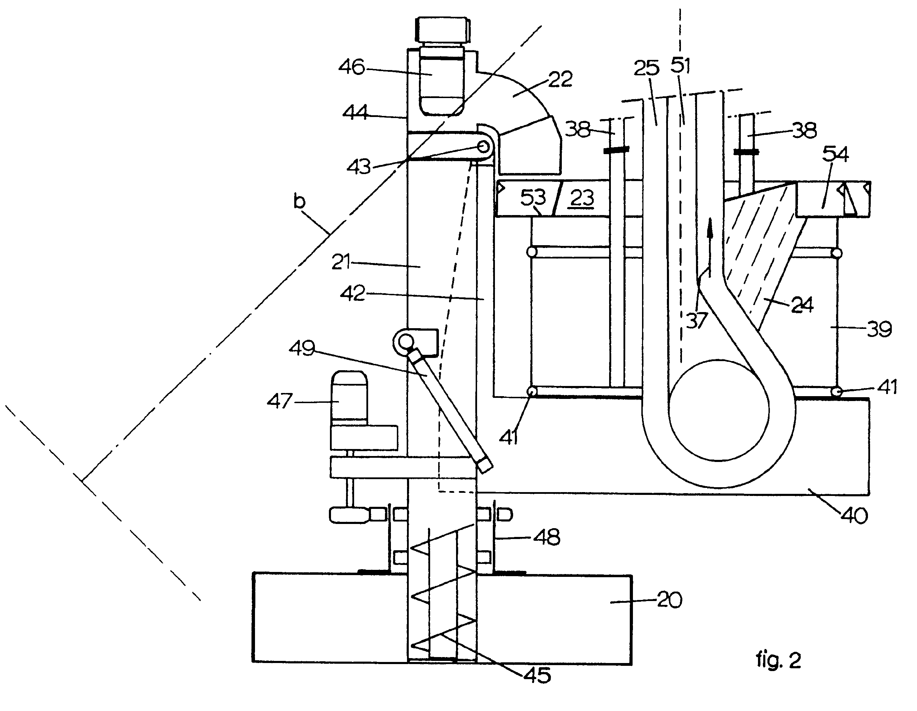

Fig. 2 shows in greater detail a view of an embodiment of the digging device.

The cell belt conveyor 25 moves in the direction indicated by the arrow 37. The cell belt conveyor runs inside a support frame 38 on which a base 39 is attached. A stool 40 is attached to it in such a way that it can rotate with respect to the base 39. A bearing 41 is located between the base and the stool. The stool is equipped with an upwardly extending arm 42 to which the outer shell of the screw conveyor 21 is attached, hinged at the axis 43. The screw 45 of this screw conveyor is driven by a motor 46 ; the speed of rotation of the screw is typically 300 rpm. At the end of the screw conveyor pointing downwards the blade wheel 20 is suspended in such a way that it can rotate through the intermediary of the subframe 48. The screw conveyor reaches into the space inside the blade wheel. The blade wheel is rotated with respect to the screw conveyor by means of the motor 47. The speed of rotation of the wheel is chosen at about 6 rpm, for a wheel diameter of approximately 4 metres. The combination of blade wheel and screw conveyor can be swivelled around the axis 43 by means of the piston-cylinder combination 49.

The digging device, comprising the blade wheel 20 and the screw conveyor 21, is only attached to the stool 42 by means of the shaft 43. For this reason the digging device as a whole can be replaced easily and quickly. Replacement may be necessary as a result of a breakdown or for adapting the blade wheel to the characteristics of the bulk cargo to be unloaded.

The axis of the screw conveyor 21 in the swung-out position is shown by the dashed line b. At the outlet of the screw conveyor an overflow hood 22 is attached which discharges into the trough 23. The overflow hood 22 is telescopic, in order to facilitate the swinging movement. The trough 23 is mounted on the base 39 in such a way that it can rotate around the axis 51. The trough is turned by means of a motor, not shown, with a speed of rotation of approximately 8 rpm.

In the trough, and parallel with its bottom face 53, there is a cover plate, not shown, which is attached to the overflow 22 and which retains any dust which comes off the bulk cargo as it flows out of the overflow. A deflector plate 54 reaches into the trough 23 which deflects the material fed into the trough from the overflow 22 in the direction of the chute 24. The deflector plate 54 can be fitted with control devices in order to control the position of loading of the cell belt conveyor 25. The chute extends over a great length in the direction of travel indicated by the arrow 37 of the cell belt conveyor 25, which extends the loading time of the cell belt conveyor. The stool 40 with the screw conveyor and blade wheel on it can be rotated around the axis 51 by means of a motor, not shown.

Because in this unloading system according to the invention during normal operation the bearings and drive systems of the cell belt conveyor and the digging device are spaced from the bulk cargo to be extracted, the reliability and the availability of the unloading system is improved with respect to some known unloading systems.

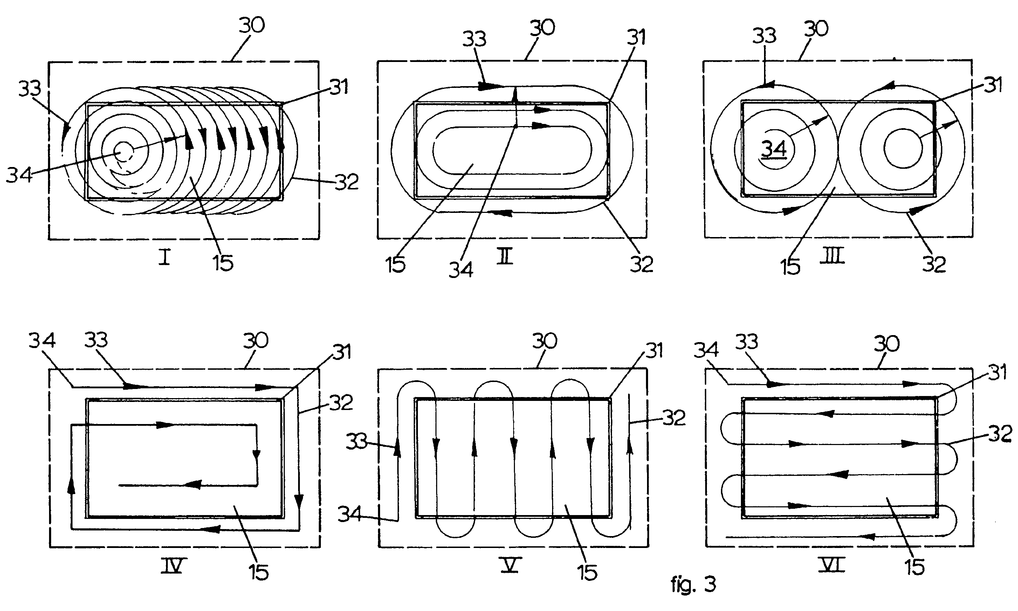

In Fig. 3 a number of extraction patterns of the cargo are shown by the references I, II, III, IV, V and VI. The extraction patterns shown are preferable to other possible extraction patterns because of considerations such as the number and duration of the idle, i.e. the non-extracting, movements, reaching into the corners of the hold, continuity in the removal of the bulk cargo and the uniformity of movement in the horizontal plane.

For all the patterns I-VI the dashed line 30 shows the contour of a hold in plan view and the double line 31 the contour of the hatch opening 15 of the hold. The continuous line 32, furnished with arrows, indicates the extraction pattern, the line 32 representing the movement of the axis (e, c) of the blade wheel 20. The arrows 33 on the line 32 indicate the direction in which the extraction process proceeds. The starting point of the extraction process is at the point denoted by 34.

Pattern I is an oval-retreating extraction pattern, pattern II is an oval-shaped extraction pattern, pattern III is a spirally circumferential extraction pattern, pattern IV is a spirally rectangular extraction pattern, pattern V is a longitudinal zig-zag extraction pattern and pattern VI is a lateral zig-zag extraction pattern.

The cargo in the hold is extracted in layers in accordance with the selected extraction process. The possibilities of movement of the continuous unloader and in particular of the digging device form an important criterion in the choice of the extraction pattern.

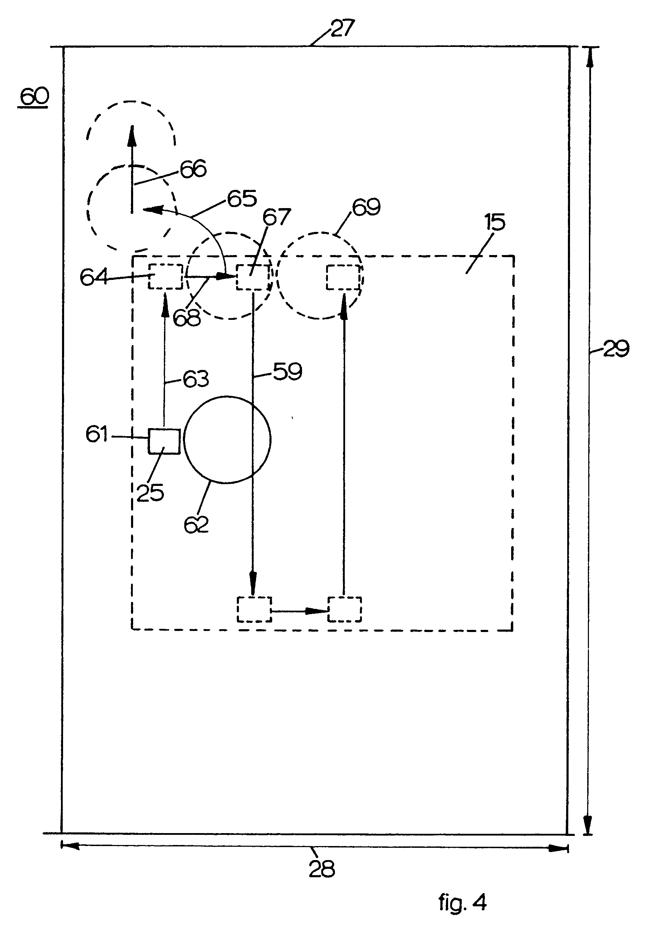

An example of an extraction pattern suitable for a continuous unloader according to the invention will be discussed in greater detail with reference to Fig. 4. In the figure, 60 represents a plan view of a part of a ship. Inside this the contour of the hold in plan view is drawn diagrammatically and indicated by the reference number 27.

The longitudinal dimension 28 of the hold is typically 24 metres, the lateral dimension 29 of the hold is typically 38 metres. The hatch opening 15 of the hold is rectangular and has typical dimensions of 18 metres by 18 metres.

As a result of the possibilities of movement of the digging device the movements of the other parts of the continuous unloader are limited during the unloading of a layer of bulk cargo. In the extraction pattern discussed below a choice has been made of only two movements, perpendicular to each other : the travel of the crab 8 (Fig. 1) and the travel of the bridge 7 (Fig.

1).

At the beginning of the extraction of a layer the cell belt conveyor 25 is in the position shown by 61. The digging device 14 can now dig a cylindrical hole 62 in the bulk cargo. Due to the movement of the crab 8 (Fig. 1) the cell belt conveyor 25 with the digging device attached can be moved in the direction indicated by the arrow 63. In this way a line of bulk cargo with a width of approximately 4 metres and a height of approximately 1 metre is dug out. When the cell conveyor has reached position 64 the digging device 14 is rotated in the direction shown by the arrow 65 and then swung in the direction shown by the arrow 66. After reaching the required extreme position of the blade wheel the bridge 7 is moved so that the cell conveyor 25 is displaced from position 64 to position 67 along the direction indicated by the arrow 68. At the same time the digging device is swung back into the vertical position and turned back into the position indicated by 69 with respect to the cell conveyor. Due to the movement of the crab a new line of bulk cargo can then be extracted in the direction indicated by the arrow 59. The process described above can be repeated a number of times until a complete layer of bulk cargo approximately 1 metre deep has been extracted.

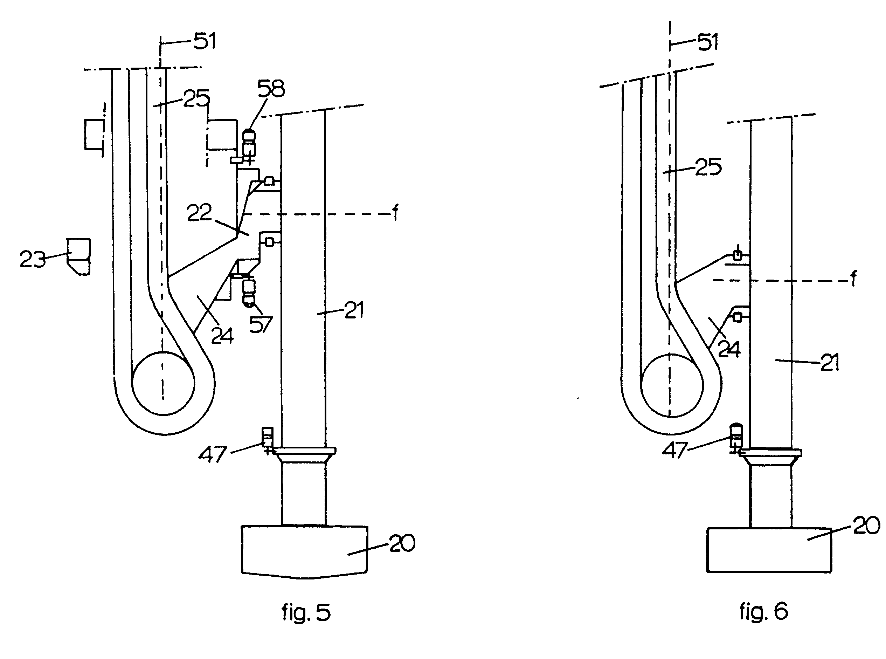

Figs. 5-9 show some embodiments of a digging device according to the invention. Elements from Figs. 2, 5, 6, 7, 8 and 9 with corresponding functions are given the same reference numbers.

The embodiment according to Fig. 5 has the same possibilities of movement as the embodiment according to Fig. 2, but the shaft axis around which the swivelling movement takes place is turned 90° in the plane perpendicular to the direction of travel of the part of the cell belt conveyor extending into the hold and is denoted by the reference f.

Reference number 57 indicates the drive motor for the rotating trough, reference number 58 denotes the motor which can cause the digging device to rotate around the shaft 51.

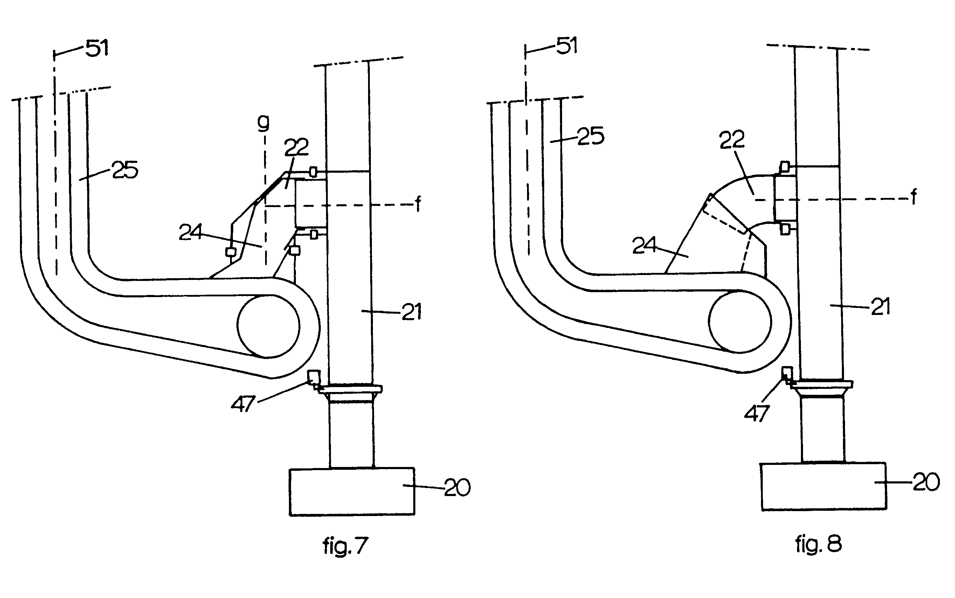

In the embodiments of Figs. 6,7,8 and 9 the possibility of rotation around the shaft 51 does not exist. In these embodiments therefore a rotating overflow is provided at the transition 12 from the vertical part of the cell belt conveyor to the conveyor in the jib. In Fig. 7 the digging device moreover is rotatable around the axis g extending parallel to the axis 51.

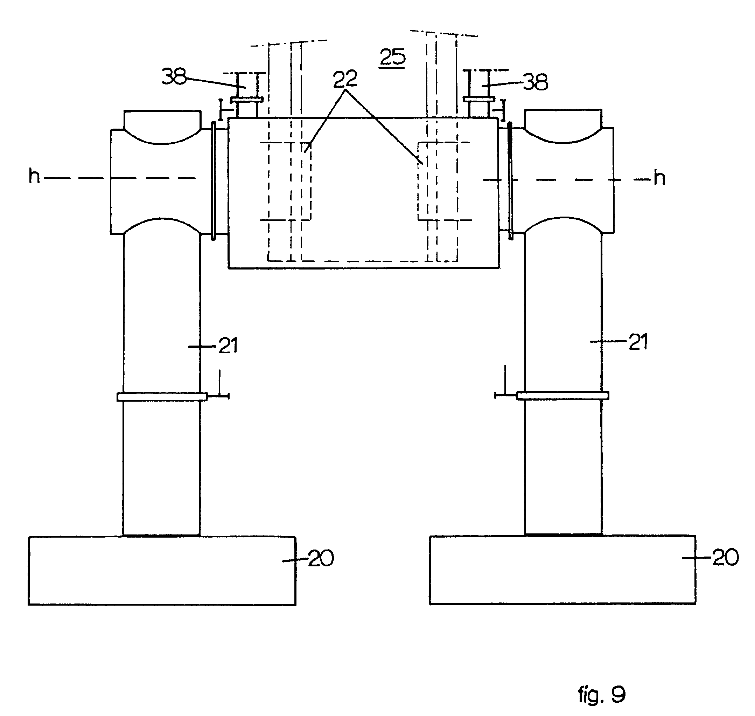

Fig. 9 shows an embodiment of an unloading system according to the invention which is equipped with two digging devices. In the embodiment shown the cell belt conveyor runs with the cells directed towards each other. Each of the two digging devices can load the cell belt conveyor. The digging devices can be rotated around the axis h.

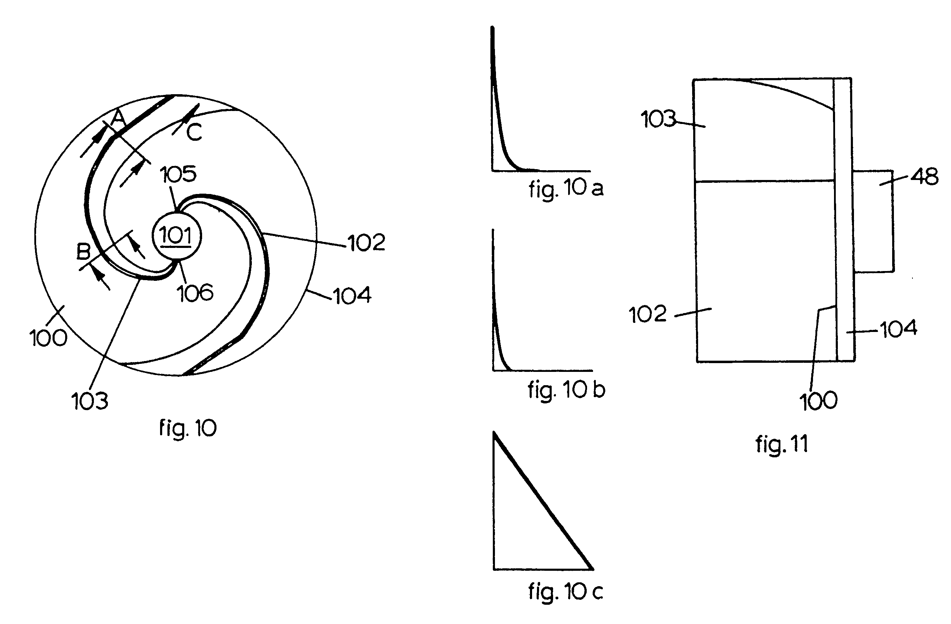

Figs. 10 and 11 show an underside view of an example of a blade wheel used in an unloading system according to the invention. The blade wheel comprises a plate 100 in which there is a central hole 101. On the underside of the plate two blades 102 and 103 are fitted to the plate and project downwardly from it.

The blades 102, 103 extend spirally from the outer ends at the outer circumference 104 of the plate in the direction of the hole 101. The inward edges 105 and 106 extend far enough to prevent the material being conveyed from being thrown outwardly by the screw conveyor, not shown in this figure, which projects through the hole 101 from the side away from the blades 102,103. Because of the plate 100 the blade wheel is less likely to become buried under the cargo and any dust produced is enclosed.

Figs. 10a, 10b and 10c show sectional views of the blade 103 taken at A, B and C respectively. As Figs. 10a, 10b and 10c show the working inside surface of the blade 103 bends outwardly away from the, not shown, screw conveyor i.e. the distance from the blade to the screw conveyor is larger at the upper end of the blade near the plate 100 than at the lower end of the blade. The amount over which the working inside surface bends outwardly decreases in the direction of the screw conveyor.

Fig. 11 shows a side view of the blade wheel. Preferably the blades on the outer circumference 104 are of less height than nearer to the discharge hole 101. Because the blade wheel therefore cuts into the material with a smaller cutting surface the blade wheel makes the digging process run smoothly. At the same time the accessibility of the corners of the hold is increased still further because, as will be seen in Fig. 5, this shape of the blades produces a wheel with an underside which is bevelled in cross section. The blade wheel shown in Fig. 11 is already equipped with the subframe 48.

## Claims

**Claims for the following Contracting States :
AT, BE, CH(LI), DE, ES, FR, GB, GR, IT, NL**

1. Apparatus for the continuous extraction and conveying of bulk material from a storage vessel (3) having a top opening (15), the apparatus having a digging device (14) which picks up the bulk material and first conveying means (25) which, in use, extends into said vessel through said top opening (15) and which is arranged to receive the bulk material from the digging device (14) and convey it outside the vessel (3), wherein the digging device has a substantially cylindrical pickup element (20) enclosing an internal discharge volume rotatable around an axis which discharges the material at a position within said discharge volume to second conveying means (21) which is separate from the first conveying means (25) and conveys the material to the first conveying means (25), characterised in that the second conveying means is a screw conveyor (21) and that the pickup element is a blade wheel (20) rotatable around the axis of the screw conveyor having at least one discharge element (102, 103) which discharge element is a blade of the blade wheel and which urges the material into the screw conveyor (21), and in that a trough (23) is arranged to receive the material from the screw conveyor (21) and deliver it directly or indirectly to the first conveying means (25).

2. Apparatus according to claim 1 wherein the trough (23) is provided with drive means (57) for rotating it about an axis (51) substantially parallel to the conveying direction of the part of the first conveying means (25) extending into the vessel.

3. Apparatus according to claim 1 or claim 2 having a chute (24) into which the trough (23) delivers the material via an outflow opening, the chute (24) being fixed relative to the first conveying means (25) and delivering the material to the first conveying means.

4. Apparatus according to any one of claims 1 to 3 wherein the axis of the screw conveyor (21) during use is located, or is locatable, parallel to the conveying direction of the part of the first conveying means (25) extending into the vessel.

5. Apparatus according to any one of claims 1 to 4 wherein, in order to vary its digging angle, the digging device (14) is pivotable about an axis (43) perpendicular to the conveying direction of the part of the first conveying means (25) extending into the vessel.

6. Apparatus according to any one of claims 1 to 5 wherein the blade wheel (20) is rotatable about an axis which during use is located, or is locatable, parallel to the conveying direction of the part of the first conveying means (25) extending into the vessel.

7. Apparatus according to any one of claims 1 to 6 which is intended for unloading a ship at a quay (1), the vessel being the hold (3) of the ship, the first conveying means (25) in use extending from within the hold at least to the quay (1).

8. Apparatus according to any one of claims 1 to 7 wherein the blade wheel has a plate at one side having an opening through which the screw conveyor extends, and has at least two blades which project away from the plate and extend spirally around the opening, the outer lower end portion of the blades bending away from the screw conveyor and constituting the discharge elements urging the material into the screw conveyor.

9. Apparatus according to claim 8 wherein the height of said blades in the direction perpendicular to the plate increases from their outer ends to their inner ends.

10. Digging device suitable for an apparatus according to any one of the preceding claims, comprising a screw conveyor (21) and a blade wheel (20) as a substantially cylindrical pick-up element enclosing an internal discharge volume which blade wheel is connected to one end of the screw conveyor (21) and rotatable around the axis of the screw conveyor, the blade wheel (20) having a top frame (100) and at least one blade (102, 103) connected to the top frame and extending spirally around the screw conveyor (21), characterised in that the blade (102, 103) is shaped such that, seen in radial direction, the distance from the blade (102, 103) to the axis of the screw conveyor (21) increases from the top frame (100) in downward direction over at least part of the height of the blade (102, 103) and in that the amount of such increase decreases along the blade in the direction to the axis over at least part of the extension of the blade.

**Claims for the following Contracting States : SE**

1. Apparatus for the continuous extraction and conveying of bulk material from a storage vessel (3) having a top opening (15), the apparatus having a digging device (14) which picks up the bulk material and first conveying means (25) which, in use, extends into said vessel through said top opening (15) and which is arranged to receive the bulk material from the digging device (14) and convey it outside the vessel (3), wherein the digging device has a substantially cylindrical pickup element (20) enclosing an internal discharge volume rotatable around an axis which discharges the material at a position within said discharge volume to second conveying means (21) which is separate from the first conveying means (25) and conveys the material to the first conveying means (25), wherein the second conveying means is a screw conveyor (21) and the pickup element is a blade wheel (20) rotatable around the axis of the screw conveyor having at least one discharge element (102, 103) which discharge element is a blade of the blade wheel and which urges the material into the screw conveyor (21), characterised by a transfer trough (23) arranged to receive the material from the screw conveyor (21) on its internal surface and deliver it directly or indirectly to the first conveying means (25).

2. Apparatus according to claim 1 wherein the trough (23) is provided with drive means (57) for rotating it about an axis (51) substantially parallel to the conveying direction of the part of the first conveying means (25) extending into the vessel.

3. Apparatus according to claim 1 or claim 2 having a chute (24) into which the trough (23)delivers the arterial via an outflow opening, the chute (24) being fixed relative to the first conveying means (25) and delivering the material to the first conveying means.

4. Apparatus according to any one of claims 1 to 3 wherein the axis of the screw conveyor (21) during use is located, or is locatable, parallel to the conveying direction of the part of the first conveying means (25) extending into the vessel.

5. Apparatus according to any one of claims 1 to 4 wherein, in order to vary its digging angle, the digging device (14) is pivotable about an axis (43) perpendicular to the conveying direction of the part of the first conveying means (25) extending into the vessel.

6. Apparatus according to any one of claims 1 to 5 wherein the blade wheel (20) is rotatable about an axis which during use is located, or is locatable, parallel to the conveying direction of the part of the first conveying means (25) extending into the vessel.

7. Apparatus according to any one of claims 1 to 6 which is intended for unloading a ship at a quay (1), the vessel being the hold (3) of the ship, the first conveying means (25) in use extending from within the hold at least to the quay (1).

8. Apparatus according to any one of claims 1 to 7 wherein the blade wheel has a plate at one side having an opening through which the screw conveyor extends, and has at least two blades which project away from the plate and extend spirally around the opening, the outer lower end portion of the blades bending away from the screw conveyor and constituting the discharge elements urging the material into the screw conveyor.

9. Apparatus according to claim 8 wherein the height of said blades in the direction perpendicular to the plate increases from their outer ends to their inner ends.

10. Digging device suitable for an apparatus according to any one of the preceding claims, comprising a screw conveyor (21) and a blade wheel (20) as a substantially cylindrical pick-up element enclosing an internal discharge volume which blade wheel is connected to one end of the screw conveyor (21) and rotatable around the axis of the screw conveyor, the blade wheel (20) having a top frame (100) and at least one blade (102, 103) connected to the top frame and extending spirally around the screw conveyor (21), characterised in that the blade (102, 103) is shaped such that, seen in radial direction, the distance from the blade (102, 103) to the axis of the screw conveyor (21) increases from the top frame (100) in downward direction over at least part of the height of the blade (102, 103) and in that the amount of such increase decreases along the blade in the direction to the axis over at least part of the extension of the blade.

**Patentansprüche**

**Patentansprüche für folgende Verstragsstaaten : AT, BE, CH(LI), DE, ES, FR, GB, GR, IT, NL**

1. Vorrichtung zum kontinuierlichen Entnehmen und Fördern von Schüttgut aus einem, eine obere Öffnung (15) aufweisenden Lagergefäß (3), welche Vorrichtung eine Grabvorrichtung (14), welche das Schüttgut aufnimmt, und ein erstes Fördermittel (25) aufweist, welches sich im Gebrauch durch die obere Öffnung (15) in das Gefäß erstreckt und welches so angeordnet ist, daß es das Schüttgut von der Grabvorrichtung (14) aufnimmt und außerhalb des Gefäßes (3) fördert, wobei die Grabvorrichtung ein im wesentlichen zylindrisches Aufnehmelement (20) aufweist, welches ein inneres Austragvolumen umschließt, um eine Achse drehbar ist und das Material an einer Stelle innerhalb dieses Austragvolumens zu einem zweiten Fördermittel (21) austrägt, welches vom ersten Fördermittel (25) getrennt ist und das Material zum ersten Fördermittel (25) befördert, dadurch gekennzeichnet, daß das zweite Fördermittel ein Schneckenförderer (21) ist und daß das Aufnehmelement ein um die Achse des Schneckenförderers drehbares Schaufelrad (20) mit zumindest einem Austragelement (102, 103) ist, welches Austragelement eine Schaufel des Schaufelrades ist und das Material in den Schneckenförderer (21) zwingt, und daß eine Rinne (23) so angeordnet ist, daß sie das Material von Schneckenförderer aufnimmt und es direkt oder indirekt dem ersten Fördermittel (25) übergibt.

2. Vorrichtung gemäß Anspruch 1, wobei die Rinne (23) mit Antriebsmittel (57) versehen ist, um sie um eine Achse (51) zu drehen, welche im wesentlichen parallel zur Förderrichtung des sich in das Gefäß erstreckenden Teiles des ersten Fördermittels ist.

3. Vorrichtung gemäß Anspruch 1 oder Anspruch 2 mit einer Rutsche (24) in welche die Rinne (23) das Material über eine Auslauföffnung übergibt, welche Rutsche (24) gegenüber dem ersten Fördermittel (25) fixiert ist und das Material an das erste Fördermittel übergibt.

4. Vorrichtung gemäß irgendeinem der Ansprüche 1 bis 3, wobei die Achse des Schneckenförderers (21) während des Gebrauches parallel zur Förderrichtung des sich in das Gefäß erstreckenden Teiles des ersten Fördermittels (25) örtlich festgelegt oder festlegbar ist.

5. Vorrichtung gemäß irgendeinem der Ansprüche 1 bis 4, wobei die Grabvorrichtung (14) zur Veränderung ihres Grabwinkels um eine Achse (43) senkrecht zur Förderrichtung des sich in das Gefäß erstreckenden Teiles des ersten Fördermittels (25) schwenkbar ist.

6. Vorrichtung gemäß irgendeinem der Ansprüche 1 bis 5, wobei das Schaufelrad (20) um eine Achse drehbar ist, welche während des Gebrauches parallel zur Förderrichtung des sich in das Gefäß erstreckenden Teiles des ersten Fördermittels (25) örtlich festgelegt oder festlegbar ist.

7. Vorrichtung gemäß irgendeinem der Ansprüche 1 bis 6, welche zum Entladen eines Schiffes an einem Kai (1) bestimmt ist, wobei das Gefäß der Laderaum (3) des Schiffes ist und sich das erste Fördermittel (25) im Gebrauch von innerhalb des Laderaumes zumindest bis zum Kai (1) erstreckt.

8. Vorrichtung gemäß irgendeinem der Ansprüche 1 bis 7, wobei das Schaufelrad eine Platte an einer Seite aufweist, welche eine Öffnung aufweist, durch die sich der Schneckenförderer erstreckt, und zumindest zwei Schaufeln aufweist, welche von der Platte weg vorstehen und sich spiralförmig um die Öffnung erstrecken, wobei die äußeren unteren Endabschnitte der Schaufeln sich von Schneckenförderer wegkrümmen und die Austragelemente bilden, welche das Material in den Schneckenförderer zwingen.

9. Vorrichtung gemäß Anspruch 8, wobei die Höhe dieser Schaufel von ihren äußeren Enden zu ihren inneren Enden in Richtung senkrecht zur Platte ansteigt.

10. Grabvorrichtung geeignet für eine Vorrichtung gemäß irgendeinem der vorhergehenden Ansprüche mit einem Schneckenförderer (21) und einem Schaufelrad (20) als ein im wesentlichen zylindrisches Aufnahmeelement, welches ein inneres Austragvolumen umschließt, wobei das Schaufelrad mit einem Ende des Schneckenförderers (21) verbunden ist und um die Achse des Schneckenförderers drehbar ist, welches Schaufelrad (20) einen oberen Rahmen (100) und zumindet eine Schaufel (102, 103) besitzt, die mit dem oberen Rahmen verbunden ist und sich spiralförmig um den Schneckenförderer (21) erstreckt, dadurch gekennzeichnet, daß die Schaufel (102, 103) so geformt ist, daß, in radialer Richtung gesehen, der Abstand von der Schaufel (102, 103) zur Achse des Schneckenförderers (21) vom oberen Rahmen (100) nach unten über zumindest einen Teil der Höhe der Schaufel (102, 103) zunimmt und daß die Größe dieser Zunahme entlang der Schaufel in Richtung zur Achse über zumindest einen Teil der Ausdehnung der Schaufel abnimmt.

**Patentansprüche für folgenden Vertragsstaat : SE**

1. Vorrichtung zum kontinuierlichen Entnehmen und Fördern von Schüttgut aus einem, eine obere Öffnung (15) aufweisenden Lagergefäß (3), welche Vorrichtung eine Grabvorrichtung (14), welche das Schüttgut aufnimmt, und ein erstes Fördermittel (25) aufweist, welches sich im Gebrauch durch die obere Öffnung (15) in das Gefäß erstreckt und welches so angeordnet ist, daß es das Schüttgut von der Grabvorrichtung (14) aufnimmt und außerhalb des Gefäßes (3) fördert, wobei die Grabvorrichtung ein im wesentlichen zylindrisches Aufnehmelement (20) aufweist, welches ein inneres Austragvolumen umschließt, um eine Achse drehbar ist und das Material an einer Stelle innerhalb dieses Austragvolumens zu einem zweiten Fördermittel (21) austrägt, welches vom ersten Fördermittel (25) getrennt ist und das Material zum ersten Fördermittel (25) befördert, wobei das zweite Fördermittel ein Schneckenförderer (21) ist und das Aufnehmelement ein um die Achse des Schneckenförderers drehbares Schaufelrad (20) mit zumindest einem Austragelement (102, 103) ist, welches Austragelement eine Schaufel des Schaufelrades ist und das Material in den Schneckenförderer (21) zwingt, dadurch gekennzeichnet, daß eine Übertragungsrinne (23) so angeordnet ist, daß sie das Material von Schneckenförderer auf ihrer Innenfläche aufnimmt und es direkt oder indirekt dem ersten Fördermittel (25) übergibt.

2. Vorrichtung gemäß Anspruch 1, wobei die Rinne (23) mit Antriebsmittel (57) versehen ist, um sie eine Achse (51) zu drehen, welche im wesentlichen parallel zur Förderrichtung des sich in das Gefäß erstreckenden Teiles des ersten Fördermittels ist.

3. Vorrichtung gemäß Anspruch 1 oder Anspruch 2 mit einer Rutsche (24) in welche die Rinne (23) das Material über eine Auslauföffnung übergibt, welche Rutsche (24) gegenüber dem ersten Fördermittel (25) fixiert ist und das Material an das erste Fördermittel übergibt.

4. Vorrichtung gemäß irgendeinem der Ansprüche 1 bis 3, wobei die Achse des Schneckenförderers (21) während des Gebrauches parallel zur Förderrichtung des sich in das Gefäß erstreckenden Teiles des ersten Fördermittels (25) örtlich festgelegt oder festlegbar ist.

5. Vorrichtung gemäß irgendeinem der Ansprüche 1 bis 4, wobei die Grabvorrichtung (14) zur Veränderung ihres Grabwinkels um eine Achse (43) senkrecht zur Förderrichtung des sich in das Gefäß erstreckenden Teiles des ersten Fördermittels (25) schwenkbar ist.

6. Vorrichtung gemäß irgendeinem der Ansprüche 1 bis 5, wobei das Schaufelrad (20) um eine Achse drehbar ist, welche während des Gebrauches parallel zur Förderrichtung des sich in das Gefäß erstreckenden Teiles des ersten Fördermittels (25) örtlich festgelegt oder festlegbar ist.

7. Vorrichtung gemäß irgendeinem der Ansprüche 1 bis 6, welche zum Entladen eines Schiffes an einem Kai (1) bestimmt ist, wobei des Gefäß der Laderaum (3) des Schiffes ist und sich das erste Fördermittel (25) im Gebrauch von innerhalb des Laderaumes zumindest bis zum Kai (1) erstreckt.

8. Vorrichtung gemäß irgendeinem der Ansprüche 1 bis 7, wobei das Schaufelrad eine Platte an einer Seite aufweist, welche eine Öffnung aufweist, durch die sich der Schneckenförderer erstreckt, und zumindest zwei Schaufeln aufweist, welche von der Platte weg vorstehen und sich spiralförmig um die Öffnung erstrecken, wobei die äußeren unteren Endabschnitte der Schaufeln sich von Schneckenförderer wegkrümmen und die Austragelemente bilden, welche das Material in den Schneckenförderer zwingen.

9. Vorrichtung gemäß Anspruch 8, wobei die Höhe dieser Schaufel von ihren äußeren Enden zu ihren inneren Enden in Richtung senkrecht zur Platte ansteigt.

10. Grabvorrichtung geeignet für eine Vorrichtung gemäß irgendeinem der vorhergehenden Ansprüche mit einem Schneckenförderer (21) und einem Schaufelrad (20) als ein im wesentlichen zylindrisches Aufnahmeelement, welches ein inneres Austragvolumen umschließt, wobei das Schaufelrad mit einem Ende des Schneckenförderers (21) verbunden ist und um die Achse des Schneckenförderers drehbar ist, welches Schaufelrad (20) einen oberen Rahmen (100) und zumindet eine Schaufel (102, 103) besitzt, die mit dem oberen Rahmen verbunden ist und sich spiralförmig um den Schneckenförderer (21) erstreckt, dadurch gekennzeichnet, daß die Schaufel (102, 103) so geformt ist, daß, in radialer Richtung gesehen, der Abstand von der Schaufel (102, 103) zur Achse des Schneckenfderers (11) vom oberen Rahmen (100) nach unten über zumindest einen Teil der Höhe der Schaufel (102, 103) zunimmt und daß die Größe dieser Zunahme entlang der Schaufel in Richtung zur Achse über zumindest einen Teil der Ausdehnung der Schaufel abnimmt.

## Revendications

### Revendications pour les Etats contractants suivants : AT, BE, CH(LI), DE, ES, FR, GB, GR, IT, NL

1. Appareil d'extraction et de transport continus de matériaux en vrac à partir d'un silo (3) de stockage pourvu d'une ouverture (15) au sommet, cet appareil comportant un dispositif excavateur (14) qui extrait les matériaux en vrac et un premier moyen (25) de transport qui, en fonctionnement, se prolonge à l'intérieur du silo par cette ouverture (15) au sommet et qui est monté pour recevoir les matériaux en vrac venant du dispositif excavateur (14) et les transporter à l'extérieur du silo (3), dans lequel le dispositif excavateur comprend un élément sensiblement cylindrique (20) d'extraction entourant un volume interne de déchargement, tournant autour d'un axe et qui déverse les matériaux en un point à l'intérieur du volume de déchargement sur un deuxième moyen (21) de transport qui est séparé du premier moyen (25) de transport et transporte les matériaux sur ce premier moyen (25) de transpor, caractérisé en ce que ce deuxième moyen de transport est un transporteur (21) à vis sans fin et en ce que l'élément extracteur est une roue (20) à couteau tournant autour de l'axe du transporteur à vis sans fin comportant au moins un élément (102, 103) de déchargement, lequel élément de déchargement est un couteau de la roue à couteau et qui pousse les matériaux dans le transporteur (21) à vis sans fin, et en ce qu'une auge (23) est prévue pour recevoir les matériaux du transporteur (21) à vis sans fin et les déverser directement ou indirectement sur le premier moyen (25) de transport.

2. Appareil suivant la revendication 1, dans lequel l'auge 23 est dotée d'un moyen (57) d'entraînement pour la faire tourner autour d'un axe (51) sensiblement parallèle à la direction de transport de la partie du premier moyen (25) de transport qui se prolonge à l'intérieur du silo.

3. Appareil suivant les revendications 1 ou 2, comportant une goulotte (24) dans laquelle l'auge (23) déverse les matériaux par une ouverture de décharge, cette goulotte (24) étant fixe par rapport au premier moyen (25) de transport et déversant les matériaux sur ce premier moyen de transport.

4. Appareil suivant l'une quelconque des revendications 1 à 3, dans lequel l'axe du transporteur (21) à vis sans fin pendant le fonctionnement est placé, ou peut être placé, parallèlement à la direction de transport de la partie du premier moyen (25) de transport qui se prolonge à l'intérieur du silo.

5. Appareil suivant l'une quelconque des revendications 1 à 4, dans lequel, afin de modifier son angle d'excavation, le dispositif excavateur (14) peut pivoter autour d'un axe (43) perpendiculaire à la direction de transport de la partie du premier moyen (25) de transport qui se prolonge à l'intérieur du silo.

6. Appareil suivant l'une quelconque des revendications 1 à 5, dans lequel la roue (20) à couteau peut tourner autour d'un axe qui, pendant le fonctionnement, est placé, ou peut être placé, parallèlement à la direction de transport de la partie du premier moyen (25) de transport qui se prolonge à l'intérieur du silo.

7. Appareil suivant l'une quelconque des revendications 1 à 6, qui est destiné au déchargement d'un navire à quai (1), le silo étant la cale (3) du navire, le premier moyen (25) de transport, pendant le fonctionnement, se prolongeant de l'intérieur de la cale au moins jusqu'au quai (1).

8. Appareil suivant l'une quelconque des revendications 1 à 7, dans lequel la roue à couteau comporte une plaque d'un côté avec une ouverture par laquelle passe le transporteur a vis sans fin, et est dotée d'au moins deux couteaux qui forment une saillie à partir de la plaque et qui se prolongent en hélice autour de l'ouverture, la partie d'extrémité inférieure extérieure des couteaux étant inclinée à l'opposé du transporteur à vis sans fin et constituant les éléments de décharge poussant les matériaux dans le transporteur à vis sans fin.

9. Appareil suivant la revendication 8, dans lequel la hauteur de ces couteaux dans la direction perpendiculaire à la plaque va en augmentant de leur extrémité extérieure à leur extrémité intérieure.

10. Dispositif excavateur approprié à un appareil suivant l'une quelconque des revendications précédentes, comprenant un transporteur (21) a vis sans fin et une roue (20) à couteau constituant un élément sensiblement cylindrique d'extraction entourant un volume interne de déchargement laquelle roue à couteau est accouplée à une extrémité du transporteur (21) à vis sans fin et peut tourner autour de l'axe du transporteur à vis sans fin, la roue (20) à couteau comportant un flasque supérieur (100) et au moins un couteau (102, 103) relié au flasque supérieur et se prolongeant en hélice autour du transporteur (21) à vis sans fin, caractérisé en ce que le couteau (102, 103) a une forme telle que, vue dans le sens radial, la distance du couteau (102, 103) à l'axe du transporteur (21) à vis augmente à partir du flasque supérieur (100) vers le bas sur au moins une partie de la hauteur du couteau (102, 103) et en ce que l'importance de cette augmentation diminue le long du couteau dans la direction de l'axe sur au moins une partie de l'étendue du couteau.

**Revendications pour l'Etat contractant suivant : SE**

1. Appareil d'extraction et de transport continus de matériaux en vrac à partir d'un silo (3) de stockage pourvu d'une ouverture (15) au sommet, cet appareil comportant un dispositif excavateur (14) qui extrait les matériaux en vrac et un premier moyen (25) de transport qui, en fonctionnement, se prolonge à l'intérieur du silo par cette ouverture (15) au sommet et qui est monté pour recevoir les matériaux en vrac venant du dispositif excavateur (14) et les transporter à l'extérieur du silo (3), dans lequel le dispositif excavateur comprend un élément sensiblement cylindrique (20) d'extraction entourant un volume interne de déchargement, tournant autour d'un axe et qui déverse les matériaux en un point à l'intérieur du volume de déchargement sur un deuxième moyen (21) de transport qui est séparé du premier moyen (25) de transport et transporte les matériaux sur ce premier moyen (25) de transport, ce deuxième moyen de transport est un transporteur (21) à vis sans fin et en ce que l'élément extracteur est une roue (20) à couteau tournant autour de l'axe du transporteur à vis sans fin comportant au moins un élément (102, 103) de déchargement, lequel élément de déchargement est un couteau de la roue à couteau et qui pousse les matériaux dans le transporteur (21) à vis sans fin, caractérisé par une auge (23) de transfert disposée de manière à recevoir les matériaux du transporteur (21) à vis sans fin sur la surface intérieure et à les déverser directement ou indirectement sur le premier moyen (25) de transport.

2. Appareil suivant la revendication 1, dans lequel l'auge 23 est dotée d'un moyen (57) d'entraînement pour la faire tourner autour d'un axe (51) sensiblement parallèle à la direction de transport de la partie du premier moyen (25) de transport qui se prolonge à l'intérieur du silo.

3. Appareil suivant les revendications 1 ou 2, comportant une goulotte (24) dans laquelle l'auge (23) déverse les matériaux par une ouverture de décharge, cette goulotte (24) étant fixe par rapport au premier moyen (25) de transport et déversant les matériaux sur ce premier moyen de transport.

4. Appareil suivant l'une quelconque des revendications 1 à 3, dans lequel l'axe du transporteur (21) à vis sans fin pendant le fonctionnement est placé, ou peut être placé, parallèlement à la direction de transport de la partie du premier moyen (25) de transport qui se prolonge à l'intérieur du silo.

5. Appareil suivant l'une quelconque des revendications 1 à 4, dans lequel, afin de modifier son angle d'excavation, le dispositif excavateur (14) peut pivoter autour d'un axe (43) perpendiculaire à la direction de transport de la partie du premier moyen (25) de transport qui se prolonge à l'intérieur du silo.

6. Appareil suivant l'une quelconque des revendications 1 à 5, dans lequel la roue (20) à couteau peut tourner autour d'un axe qui, pendant le fonctionnement, est placé ou peut être placé, parallèlement à la direction de transport de la partie du premier moyen (25) de transport qui se prolonge à l'intérieur du silo.

7. Appareil suivant l'une quelconque des revendications 1 à 6, qui est destiné au déchargement d'un navire à quai (1), le silo étant la cale (3) du navire, le premier moyen (25) de transport, pendant le fonctionnement, se prolongeant de l'intérieur de la cale au moins jusqu'au quai (1).

8. Appareil suivant l'une quelconque des revendications 1 à 7, dans lequel la roue à couteau comporte une plaque d'un côté avec une ouverture par laquelle passe le transporteur à vis sans fin, et est dotée d'au moins deux couteaux qui forment une saillie à partir de la plaque et qui se prolongent en hélice autour de l'ouverture, la partie d'extrémité inférieure extérieure des couteaux étant inclinée à l'opposé du transporteur à vis sans fin et constituant les éléments de décharge poussant les matériaux dans le transporteur à vis sans fin.

9. Appareil suivant la revendication 8, dans lequel la hauteur de ces couteaux dans la direction perpendiculaire à la plaque va en augmentant de leur extrémité extérieure à leur extrémité intérieure.

10. Dispositif excavateur approprié à un appareil suivant l'une quelconque des revendications précédentes, comprenant un transporteur (21) à vis sans fin et une roue (20) à couteau constituant un élément sensiblement cylindrique d'extraction entourant un volume interne de déchargement laquelle roue à couteau est accouplée à une extrémité du transporteur (21) à vis sans fin et peut tourner autour de l'axe du transporteur à vis sans fin, la roue (20) à couteau comportant un flasque supérieur (100) et au moins un couteau (102, 103) relié au flasque supérieur et se prolongeant en hélice autour du transporteur (21) à vis sans fin, caractérisé en ce que le couteau (102, 103) a une forme telle que vue dans le sens radical, la distance du couteau (102, 103) à l'axe du transporteur (21) à vis augmente à partir du flasque supérieur (100) vers le bas sur au moins une partie de la hauteur du couteau (102, 103) et en ce que l'importance de cette augmentation diminue le long du couteau dans la direction de l'axe sur au moins une partie de l'étendue du couteau.

fig. 1

EP 0 284 154 B1

fig. 2

fig. 3

16

fig. 4

fig. 5

fig. 6

EP 0 284 154 B1

fig. 8

fig. 7

EP 0 284 154 B1

fig. 9

fig. 10

fig. 10 a

fig. 10 b

fig. 10 c

fig. 11

EP 0 284 154 B1